Europäisches Patentamt

European Patent Office

Office européen des brevets

(11) Veröffentlichungsnummer: **0 474 980 A1**

## (12) EUROPÄISCHE PATENTANMELDUNG

(21) Anmeldenummer: **91109686.5**

(22) Anmeldetag: **13.06.91**

(51) Int. Cl.5: **A47J  41/02**, A47G  19/12

(30) Priorität: **13.08.90 DE 9011757 U**

(43) Veröffentlichungstag der Anmeldung:
**18.03.92 Patentblatt  92/12**

(84) Benannte Vertragsstaaten:
**AT BE CH DK ES FR IT LI LU NL SE**

(71) Anmelder: **Robert Krups GmbH & Co. KG
Heresbachstrasse 29
W-5650 Solingen 19(DE)**

(72) Erfinder: **Rixen, Edgar
Limminghofer Strasse 11
W-5650 Solingen 11(DE)**
Erfinder: **Fühner, Hubert
Zwergstrasse 6
W-5650 Solingen 19(DE)**

(74) Vertreter: **Buse, Karl Georg, Dipl.-Phys. et al
Patentanwälte Dipl.-Phys. Buse Dipl.-Phys.
Mentzel Dipl.-Ing. Ludewig Unterdörnen 114
W-5600 Wuppertal 2(DE)**

(54)  **Isolierkanne.**

(57) Es handelt sich um eine Isolierkanne (10) mit einem vorzugsweise einen Einsatzkörper, wie einen Glaskörper aufnehmenden Gehäuse (11). Die untere Öffnung dieses Gehäuses ist durch einen Boden (12) und die obere Öffnung durch einen Deckel (19) verschließbar. Ferner weist die Isolierkanne (10) einen Handgriff (26) und eine Schnaupe (14) zum Ausgießen der Flüssigkeit auf. Erfindungsgemäß ist die Schnaupe (14) der Isolierkanne (10) als Hohlkegel ausgebildet, dessen den kleinsten Durchmesser aufweisender Teil dem Gehäuse (11) zugekehrt ist, während der den größten Durchmesser aufweisenden Teil des Hohlkegels eine umlaufende Ausgußkante bildet. Bei der bevorzugten Ausführungsform der Erfindung schließt sich an den kleinsten Durchmesser des Hohlkegels ein zylindrisches Verbindungsteil an, dessen Innenwand mit einer Dichtfläche des Deckels (19) zusammenwirkt.

FIG.1

EP 0 474 980 A1

Die Erfindung bezieht sich auf eine Isolierkanne mit einem vorzugsweise einen Einsatzkörper, wie einen Glaskörper aufnehmenden Gehäuse, dessen untere Öffnung durch einen Boden und dessen obere Öffnung durch einen Deckel verschließbar ist und die einen Handgriff und eine Schnaupe zum Ausgießen der Flüssigkeit aufweist.

Derartige Isolierkannen sind in zahlreichen Ausführungsformen bekannt. Dabei gibt es sowohl Ausführungsformen von Isolierkannen, die aus einem metallischen Werkstoff gefertigt sind, als auch solche, bei deren Herstellung ein Kunststoff eingesetzt wird. Je nach dem Volumen des Einsatzkörpers, wie eines Glaskörpers, sind die bekannten Isolierkannen unterschiedlich bemessen. Dies gilt sowohl für die Breiten- als auch für die Höhenabmessungen. Zur Erleichterung des Ausgießens der im Einsatzkörper befindlichen Flüssigkeit sind die bekannten Isolierkannen in aller Regel sowohl mit einem Handgriff als auch mit einer Ausgießschnaupe versehen. Diese Ausgießschnaupe ist dabei meist auf der dem Handgriff gegenüberliegenden Seite der Isolierkanne angebracht. Auf diese Weise soll ein gezieltes Ausgießen der Flüssigkeit aus dem Einsatzkörper der Isolierkanne gewährleistet werden. Durch die bisherige Gestaltung der Schnaupe bei Isolierkannen ist somit die Ausgießrichtung der Flüssigkeit vorgegeben.

Hier setzt die Erfindung ein. Sie will einmal die Schnaupe der Isolierkanne so gestalten, daß der Benutzer der Isolierkanne ein Ausgießen der im Inneren der Isolierkanne befindlichen Flüssigkeit in unterschiedlichen Richtungen durchführen kann. Zum anderen will sie aber auch die Isolierkanne so gestalten, daß sie in wirtschaftlicher Weise hergestellt werden kann.

Zur Lösung der gestellten Aufgabe schlägt die Erfindung vor, die Schnaupe der Isolierkanne als Hohlkegel auszubilden, dessen den kleinsten Durchmesser aufweisender Teil dem Gehäuse zugekehrt ist und dessen den größten Durchmesser aufweisender Teil eine umlaufende Ausgußkante bildet. Durch die erfindungsgemäße Ausbildung der Schnaupe wird gewissermaßen eine Umlaufschnaupe geschaffen, die ein gleichmäßiges Ausgießen der Flüssigkeit aus dem Einsatzkörper in allen frei zu wählenden Richtungen zuläßt. Der Benutzer einer solchen Isolierkanne ist also nicht mehr an eine bestimmte Richtung beim Ausgießen der Flüssigkeit aus der Isolierkanne gebunden. Es ist somit im Vergleich zu den bekannten Ausführungsformen von Isolierkannen beispielsweise auch ein seitliches Ausgießen der Flüssigkeit ohne weiteres möglich. Da die Schnaupe umlaufend ausgebildet ist, ist der Benutzer in keinem Falle an die Einhaltung eines bestimmten Ausgießwinkels gebunden.

Es empfiehlt sich, an den kleinsten Durchmesser des Hohlkegels einen zylindrischen Verbindungsteil zum Gehäuse anschließen zu lassen, dessen Innenwand mit einer Dichtfläche des Deckels zusammenwirken kann. Dieser zylindrische Verbindungsteil hat einen solchen Durchmesser, der demjenigen des kleinsten Durchmesser des Hohlkegels entspricht. Von dem kleinsten Durchmesser des Hohlkegels aus erweitert sich der Durchmesser nach außen hin stetig, bis er in die umlaufende Abschlußkante einmündet. An dieser Stelle hat der Hohlkegel seinen größten Durchmesser.

Bei der bevorzugten Ausführungsform der Erfindung sind das Gehäuse der Isolierkanne, das zylindrische Verbindungsglied und der Hohlkegel als einstückiger Körper ausgebildet. Zur Vervollständigung der Isolierkanne ist es dann lediglich noch erforderlich, den Boden einzusetzen und die obere Öffnung der Isolierkanne durch Anbringen des an sich bekannten Abschlußdeckels zu verschließen. Zur Herstellung einer solchen einstückigen Baueinheit wird zweckmäßig einer der in der einschlägigen Industrie gebräuchlichen Kunststoffe eingesetzt. Dies bedeutet, daß auch der die umlaufende Schnaupe bildende Hohlkegel aus einem Kunststoff besteht. Beim Ausgießen der Flüssigkeit aus einer solchen Isolierkanne kommt somit die Flüssigkeit mit Bereichen der Innenwand des Hohlkegels zusammen.

Ein weiterer Vorschlag der Erfindung kennzeichnet sich durch die Anbringung eines Einsatzes im Bereich der Schnaupe der Isolierkanne. Ein solcher Einsatz ist in seiner Gestalt und in seinen Abmessungen denjenigen des Hohlkegels der Isolierkanne angepaßt. Durch die Verwendung eines solchen Einsatzes kann im Bereich der Schnaupe ein anderer Werkstoff eingesetzt werden als der, welcher zur Herstellung der einstückigen Baueinheit benutzt wird. Beispielsweise ist es möglich, den Einsatz aus einem metallischen Werkstoff herzustellen. Auf diese Weise kann man den oberen Teil der Isolierkanne optisch gegenüber dem unteren Teil abheben. Vor allem ist es aber auch möglich, die auszugießende Flüssigkeit nur mit einem metallischen Werkstoff in Verbindung kommen zu lassen, was von dem Benutzer vielfach gewünscht wird.

Es empfiehlt sich, einen solchen Einsatz als einstückigen Körper herzustellen, der an seiner einen Seite eine zylindrische Verlängerung aufweist. An der Außenfläche dieser Verlängerung sind Befestigungsmittel vorgesehen, die mit der Innenwand des zylindrischen Verbindungsteiles des Gehäuses der Isolierkanne zusammenwirken. Hinsichtlich der Ausbildung und der Gestaltung der Verbindungsmittel zwischen dem Einsatz und dem Gehäuse der Isolierkanne können unterschiedliche Ausführungsformen eingesetzt werden. Dabei kann es sich sowohl um solche handeln, mit denen eine lösbare Verbindung zwischen den genannten Teilen herbeigeführt werden kann, als auch um andere, bei denen eine feste Verbindung des Einsatzes mit dem Gehäuse der Isolierkanne erzielt wird. Als mögliche Verbindungsmittel der einen Gruppe können beispielsweise bajonett- oder rastverschlußartige Verbindungsmittel eingesetzt werden. Sofern eine feste Verbindung des Einsatzes mit dem Gehäuse des Isolierkörpers erzielt werden soll, kann man beispielsweise auf Klebverbindungen zurückgreifen. Für das Aufbringen derartiger Klebemittel steht eine verhältnismäßig große Klebfläche zur Verfügung.

Nach einem anderen Vorschlag der Erfindung sind an der Innenwand der zylindrischen Verlängerung des Einsatzes Befestigungsvorsprünge zum lösbaren Anbringen des Deckels angeordnet. Eine besonders wirtschaftliche Herstellung dieser Befestigungsvorsprünge wird dadurch erreicht, daß sie durch bereichsweises Herausdrücken der zylindrischen Verlängerung gebildet sind. Auf die Verwendung zusätzlicher, also nachträglich aufzubringender Befestigungsvorsprünge kann dadurch verzichtet werden.

Die bevorzugte Ausführungsform kennzeichnet sich durch die Anordnung von zwei diametral gegenüberliegenden Befestigungsvorsprüngen, die zweckmäßig untereinander gleichgestaltet sind. Mit diesen Befestigungsvorsprüngen können dann in grundsätzlich bekannter Weise Gegenvorsprünge zusammenwirken, die an der Umfangsfläche des Deckels der Isolierkanne vorgesehen sind.

Zur wirtschaftlichen Herstellung der Isolierkanne ist vorgesehen, den Handgriff durch in Abstand voneinander angeordnete, quer zur Umfangsfläche des Gehäuses verlaufende Schenkel zu bilden, die durch einen Steg miteinander in Verbindung stehen, der einen Freiraum zur Umfangsfläche des Gehäuses beläßt.

Dabei ist es möglich, die Schenkel den Steg überragende Verlängerungen aufweisen zu lassen, die ihrerseits einen parallel zum Steg verlaufenden Abschlußdeckel tragen. Dieser Abschlußdeckel ist zweckmäßig lösbar mit den übrigen Teilen des Handgriffes verbunden. Dies kann beispielsweise dadurch geschehen, daß der Abschlußdeckel über eine Rastverbindung mit den benachbarten Bereichen des Handgriffes verbunden wird.

Dabei ist es möglich, den Handgriff Vorsprünge und Rasten aufweisen zu lassen, die mit Gegenrasten des Abschlußdeckels kuppelbar sind. Bei einer solchen Ausbildung kann der Abschlußdeckel durch einfaches Aufrasten mit den übrigen Teilen des Handgriffes verbunden werden. Auf der anderen Seite ist bei Bedarf auch ein Wiederlösen des Abschlußdeckels möglich.

In den Figuren der Zeichnungen ist die Erfindung in mehreren Ausführungsbeispielen dargestellt und zwar zeigen:

Fig. 1    in Seitenansicht eine erste Ausführungsform der erfindungsgemäßen Isolierkanne,

Fig. 2    im vergrößerten Maßstab, teilweise in Seitenansicht und teilweise im Schnitt das Gehäuse der Isolierkanne nach der Fig. 1 bei entferntem Boden und Deckel sowie bei entferntem Abschlußdeckel des Handgriffes,

Fig. 3    eine Unteransicht des Gehäuses der Isolierkanne gemäß der Fig. 2, teilweise im Schnitt,

Fig. 4    einen Längsschnitt durch das Gehäuse der Isolierkanne nach der Fig. 2 der Zeichnung,

Fig. 5    einen Längsschnitt durch einen Einsatz für die Schnaupe der Isolierkanne nach der Fig. 1 der Zeichnung, Schnittführung entlang der Linie V-V der Fig. 6 und

Fig. 6    in Draufsicht und im vergrößerten Maßstab den Einsatz gemäß der Fig. 5 der Zeichnung.

Es sei zunächst erwähnt, daß in den Figuren der Zeichnungen nur diejenigen Teile einer Isolierkanne dargestellt sind, welche für das Verständnis der Erfindung Bedeutung haben. So fehlt insbesondere der vorgesehene Einsatzkörper, der in dem Hohlraum des Gehäuses untergebracht wird und der die Flüssigkeit, z.B. Tee, Kaffee od.dgl. aufnehmen soll. Auch auf die Darstellung von Dichtungsmitteln zwischen den einzelnen Teilen der Isolierkanne ist verzichtet worden. Im übrigen können alle in den Zeichnungen fehlenden Teile eine an sich bekannte Ausbildung haben und in ebenfalls an sich bekannter Weise mit den dargestellten Teilen der Isolierkanne verbunden werden.

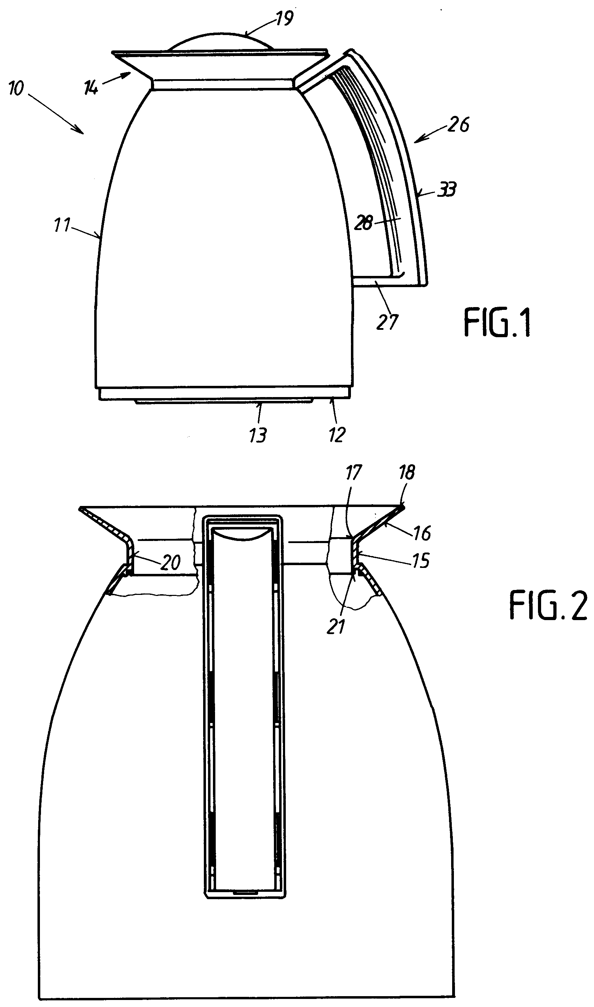

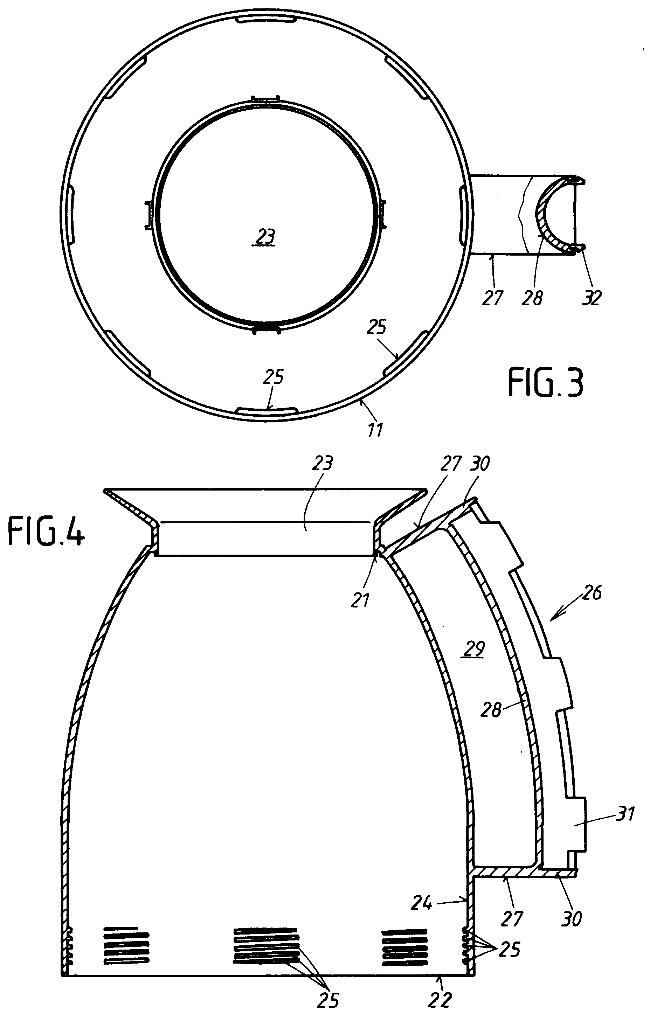

In der Fig. 1 der Zeichnung ist eine erfindungsgemäße Isolierkanne dargestellt und zwar in ihrer Ruhe- oder Aufbewahrungslage. In dieser Lage steht sie beispielsweise auf einer Fläche, wie auf einem Tisch. Die Isolierkanne gemäß der Fig. 1 der Zeichnung ist generell mit 10 bezeichnet. Sie weist ein Gehäuse 11 auf, dessen Hauptteil glockenartig gestaltet ist und somit einen großen Aufnahmeraum für einen nicht dargestellten Einsatzkörper, beispielsweise für einen Glaskörper bildet. Nach unten hin ist das Gehäuse 11 offen. Die nicht näher bezeichnete Öffnung wird durchs einen Boden 12 verschlossen, der auf seiner Außenseite mit einer Aufstellfläche 13 ausgerüstet ist. Auf der dem Boden 12 gegenüberliegenden Seite hat das Gehäuse 11 eine Öffnung, die - wie aus der Fig. 1 ersichtlich - durch den Deckel 19 verschlossen ist. Im Bereich dieser oberen Öffnung liegt die generell mit 14 bezeichnete Schnaupe, die erfindungsgemäß als Hohlkegel 16 ausgebildet ist. Der kleinste Durchmesser 17 dieses Hohlkegels ist dem Boden 12 des Gehäuses zugekehrt. Der den größten Durchmesser aufweisende Teil des Hohlkegels 16 bildet demgegenüber eine umlaufende Ausgußkante 18. Diese ist am besten aus der Fig. 2 der Zeichnung zu erkennen. Dies bedeutet, daß der Hohlkegel seinen Ausgangspunkt im Bereich des kleinsten Durchmessers 17 nimmt. Von dort aus vergrößert sich der Durchmesser stetig, bis er im Bereich der Ausgußkante 18 seinen größten Wert erreicht.

Wie die Fig. 2 der Zeichnung am besten erkennen läßt, schließt sich an den kleinsten Durchmesser 17 des Hohlkegels 16 ein zylindrischer Verbindungsteil 15 zum Gehäuse 11 an. Die Innenwand des zylindrischen Verbindungsteiles 15 bildet eine Dichtfläche, die mit der nicht sichtbaren Umfangsfläche des Deckels 19 zusammenwirkt. Im Bedarfsfalle kann die Umfangsfläche des Deckels 19 auch mit Dichtrippen od.dgl. versehen sein. Diese können eine bekannte Ausbildung aufweisen.

In den glockenartigen Hohlraum des Gehäuses 11 wird ein an sich bekannter Einsatzkörper, beispielsweise ein Glaskörper untergebracht, Zur Lagesicherung bzw. zur Abstützung des oberen Bereiches eines solchen, der Einfachheit halber nicht dargestellten Einsatzkörpers sind an der Innenwand des Hohlraumes Stützrippen 21 vorgesehen. Im übrigen kann die Lage eines solchen Einsatzkörpers im Bereich des glockenförmigen Hohlraumes des Gehäuses 11 mit bekannten Mitteln gesichert werden.

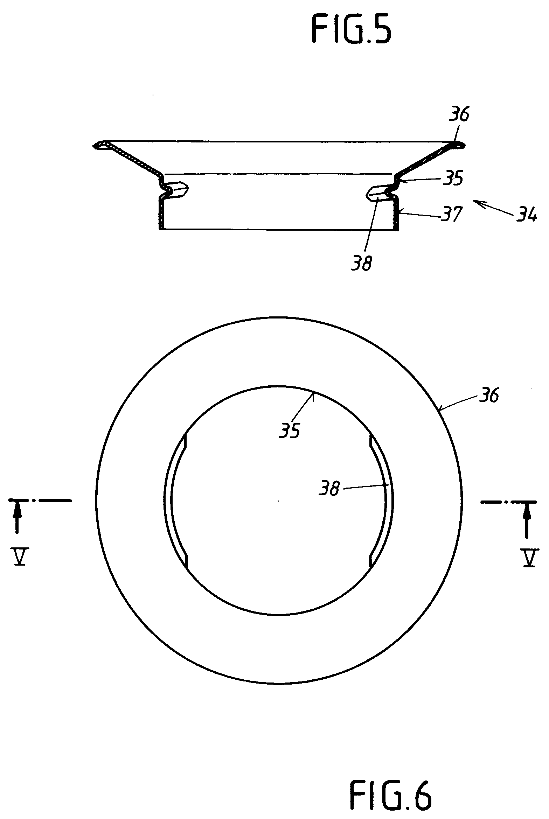

Im Ausführungsbeispiel nach der Fig. 1 der Zeichnung sind das Gehäuse 11, das zylindrische Verbindungsglied 15 und der Hohlkegel 16 als einstückiger Körper ausgebildet. Zu diesem einstückigen Körper, der ein Kunststoffkörper sein kann, gehört auch der generell mit 26 bezeichnete Handgriff, dessen wesentliche Teile - wie die Fig. 4 zeigt - der Umfangsfläche des Gehäuses 11 angeformt sind.

Aus der gleichen Fig. 4 ist auch ersichtlich, daß die obere Öffnung 23 wesentlich kleiner gehalten ist als die Öffnung 22, die an der gegenüberliegenden Seite des Gehäuses 11 vorgesehen ist. Diese untere Öffnung 22 wird durch einen Boden 12 verschlossen. Um eine lösbare Verbindung zwischen dem Boden 12 und der inneren Begrenzungswand des Gehäuses 11 der Isolierkanne 10 herbeizuführen, sind Vorsprünge 25 an der Innenwand 24 angebracht. Diese sind - vergl. dazu die Fig. 4 - gruppenweise angeordnet. Mit Hilfe dieser Vorsprünge und der Gegenvorsprünge am Boden 12 kann letzterer an dem Gehäuse 11 angebracht werden und verschließt dann die Öffnung 22, so wie es in der Fig. 1 der Zeichnung wiedergegeben ist.

Die Fig. 4 der Zeichnung zeigt, daß der generell mit 26 bezeichnete Handgriff der Isolierkanne 10 durch in Abstand voneinander angeordnete, quer zur Umfangsfläche des Gehäuses 11 verlaufende Schenkel 27 gebildet wird. Diese Schenkel 27 sind durch einen Steg 28 miteinander verbunden. Dieser hat eine halbkreisförmige Querschnittsform, wie die Fig. 3 der Zeichnung erkennen läßt. Zwischen der äußeren Begrenzungsfläche des Steges 28 und der benachbarten Umfangsfläche des Gehäuses 11 der Isolierkanne 10 verbleibt ein Freiraum 29, der von den Fingern des Benutzers der Isolierkanne durchgriffen werden kann.

Im gewählten Ausführungsbeispiel weisen die Schenkel 27 den Steg 28 überragende Verlängerungen 30 auf, die einen parallel zum Steg 28 verlaufenden Abschlußdeckel 33 tragen. Dieser ist in der Fig. 1 in seiner wirksamen Lage wiedergegeben. In dieser Lage ist der Abschlußdeckel 33 über eine Rastverbindung mit den benachbarten Bereichen des Handgriffes 26 verbunden. Im dargestellten Ausführungsbeispiel weist der Handgriff 26 Vorsprünge 31 und Rasten 32 auf, die mit den nicht dargestellten Gegenrasten des Abschlußdeckels 33 in bekannter Weise kuppelbar sind.

Bei der Ausführungsform der Isolierkanne nach den Fig. 1 bis 4 der Zeichnung ist somit die als Hohlkegel 16 ausgebildete Schnaupe 14 unmittelbarer Bestandteil des Gehäuses 11 der Isolierkanne 10. Dies bedeutet, daß beim bestimmungsgemäßen Gebrauch der Isolierkanne die aus dem nicht dargestellten Einsatzkörper stammende Flüssigkeit über einen Bereich der umlaufenden Ausgußkante 18 in ein Gefäß, beispielsweise eine Tasse, umgeschüttet werden kann. Sofern die Isolierkanne 10 nach den Fig. 1 bis 4 aus einem Kunststoff gefertigt ist, kommt somit die Flüssigkeit im Bereich der Schnaupe mit einem Kunststoff in Verbindung. Sofern dies nicht gewünscht sein sollte oder sofern man die Schnaupe aus gestalterischen Gründen z.B. farblich gegenüber dem Unterteil der5 Isolierkanne absetzen will, kann in Abwandlung der Ausführungsform nach der Fig. 1 der Zeichnung im Bereich der Schnaupe 14 der Isolierkanne 10 ein generell mit 34 bezeichneter Einsatz angebracht werden. Ein solcher Einsatz ist in den Fig. 5 und 6 der Zeichnung wiedergegeben. Gemäß diesem Ausführungsbeispiel ist der Einsatz 34 ein einstückiger Metallkörper. Der obere Bereich des Einsatzes 34 ist wiederum als Hohlkegel gestaltet. In diesem Falle ist der kleinste Durchmesser des Hohlkegels mit 35 bezeichnet. Nach außen hin vergrößert sich der Durchmesser des Hohlkegels immer mehr, bis er schließlich den größten Wert einnimmt. Dies ist die umlaufende Ausgußkante 36. Diese umlaufende Ausgußkante des Einsatzes 34 übergreift nach dem Anbringen desselben die umlaufende Ausgußkante 18 des Hohlkegels 16 gemäß der Fig. 4 der Zeichnung.

Im gewählten Ausführungsbeispiel weist der Einsatz 34 eine zylindrische Verlängerung 37 auf, an deren Außenfläche Befestigungsmittel vorgesehen sind, die mit der Innenwand 20 des zylindrischen Verbindungsteiles 15 des Gehäuses 11 der Isolierkanne 10 zusammenwirken. Hinsichtlich der Auswahl der Befestigungsmittel kann man auf bekannte Ausführungsformen zurückgreifen. Dabei ist es sowohl möglich, solche Befestigungsmittel zu verwenden, die eine lösbare Anbringung des Einsatzes 34 an den zugeordneten Teilen des Gehäuses der Isolierkanne 10 zulassen, als auch Verbindungsmittel einzusetzen, die eine nicht lösbare Verbindung zwischen den genannten Teilen herbeiführen. Die erstgenannten lösbaren Verbindungsmittel werden beispielsweise dann benutzt, wenn es darauf ankommt, bei Bedarf den Einsatz 34 von dem Gehäuse 10 zu entfernen, beispielsweise zum Zwecke der Reinigung. In diesem Falle können beispielsweise bajonettverschlußartige Verbindungen oder Rastverbindungen bekannter Ausbildung eingesetzt werden. Soll dagegen eine feste Verbindung zwischen dem Einsatz 34 und dem Gehäuse 11 der Isolierkanne 10 herbeigeführt werden, so kann man auf die Außenfläche der zylindrischen Verlängerung 37 des Einsatzes 34 Klebmittel aufbringen.

Wie die Fig. 5 der Zeichnung am besten erkennen läßt, sind an der Innenwand der zylindrischen Verlängerung 37 des Einsatzes 34 Befestigungsvorsprünge 38 zum lösbaren Anbringen des Deckels 19 angebracht. Diese Befestigungsvorsprünge sind im dargestellten Ausführungsbeispiel in wirtschaftlich vorteilhafter Weise durch bereichsweises Herausdrücken der zylindrischen Verlängerung 38 gebildet.

Im dargestellten Ausführungsbeispiel gemäß den Fig. 5 und 6 sind zwei diametral gegenüberliegend angeordnete Befestigungsvorsprünge 38 vorgesehen, die untereinander gleichgestaltet sind. Diese Befestigungsvorsprünge 38 können in bekannter Weise mit Gegenvorsprüngen des Deckels 19 zusammenwirken. Auf diese Weise ist eine lösbare Verbindung zwischen dem Deckel 19 und dem Einsatz 34 herbeigeführt, die darüber hinaus noch den Vorteil hat, daß sie abdichtet.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Dies gilt insbesondere für die Gestalt und für die Abmessungen des Hohlkegels 16, der die Schnaupe 14 bildet. So kann beispielsweise der Neigungswinkel der Wandungen des Hohlkegels 16 gegenüber der Vertikalen und/oder gegenüber der Horizontalen abweichend von den dargestellten Ausführungsbeispielen gewählt werden. Auch kann die Isolierkanne und der ihr angeformte Handgriff eine andere als die dargestellte Ausführung erhalten. In den dargestellten Ausführungsbeispielen ist bei Verwendung eines Einsatzes 34 vorgesehen, diesen im Bereich der Schnaupe 14 der Isolierkanne 10 anzubringen. Dies bedeutet, daß die dem Gehäuse 11 angeformte Schnaupe 14 und die des Einsatzes 34 übereinander angeordnet sind. Auf eine derartige doppelte Wandstärke im Bereich der umlaufenden Schnaupe kann man gegebenenfalls verzichten. In einem solchen Falle kann man die dem Gehäuse 11 zugeordnete Schnaupe 14 fortlassen und einen Einsatz 34 unmittelbar mit dem Gehäuse 11 der Isolierkanne 10 verbinden.

Bezugszeichenliste :

| 10 | - Isolierkanne |
| 11 | - Gehäuse (von 10) |
| 12 | - Boden (von 10) |
| 13 | - Aufstellfläche |
| 14 | - Schnaupe (von 10) |
| 15 | - zylindrischer Verbindungsteil |
| 16 | - Hohlkegel |
| 17 | - kleinster Durchmesser (von 16) |
| 18 | - umlaufende Ausgußkante (von 14) |
| 19 | - Deckel |
| 20 | - Innenwand (von 15) |
| 21 | - Stützrippen |
| 22 | - untere Öffnung (von 11) |
| 23 | - obere Öffnung (von 11) |
| 24 | - innere Begrenzungswand (von 11) |
| 25 | - Vorsprung (an 24) |
| 26 | - Handgriff |
| 27 | - Schenkel (von 26) |
| 28 | - Verbindungssteg (von 27) |
| 29 | - Freiraum (zwischen 11 und 28) |
| 30 | - Verlängerung |
| 31 | - Vorsprung |
| 32 | - Raste |
| 33 | - Abschlußdeckel (von 26) |
| 34 | - Einsatz (für 14) |
| 35 | - kleinster Durchmesser |
| 36 | - umlaufende Ausgußkante |
| 37 | - zylindrische Verlängerung |
| 38 | - Befestigungsvorsprung |

**Patentansprüche**

1. Isolierkanne mit einem vorzugsweise einen Einsatzkörper, wie einen Glaskörper aufnehmenden Gehäuse, dessen untere Öffnung durch einen Boden und dessen obere Öffnung durch einen Deckel verschließbar ist und die einen Handgriff und eine Schnaupe zum Ausgießen der Flüssigkeit aufweist,

   **dadurch gekennzeichnet,**

daß die Schnaupe (14) der Isolierkanne (10) als Hoh]kegel (16) ausgebildet ist, dessen den kleinsten Durchmesser (17, 35) aufweisender Teil dem Gehäuse (11) zugekehrt ist und dessen den größten Durchmesser aufweisender Teil eine umlaufende Ausgußkante (18 bzw. 36) bildet.

2. Isolierkanne nach Anspruch 1, dadurch gekennzeichnet, daß sich an den kleinsten Durchmesser (17) des Hohlkegels (16) ein zylindrischer Verbindungsteil (15) zum Gehäuse (11) anschließt, dessen Innenwand mit einer Dichtfläche des Deckels (19) zusammenwirkt (Fig. 1 bis 4).

3. Isolierkanne nach Anspruch 1 und 2, dadurch gekennzeichnet, daß das Gehäuse (11), das zylindrische Verbindungsglied (15) und der Hohlkegel (16) als einstückiger, vorzugsweise als Kunststoffkörper ausgebildet sind (Fig. 1 bis 4).

4. Isolierkanne nach Anspruch 1, gekennzeichnet durch die Anbringung eines Einsatzes (34) im Bereich der Schnaupe (14) der Isolierkanne (10) Fig. 5 und 6).

5. Isolierkanne nach Anspruch 4, dadurch gekennzeichnet, daß der Einsatz (34) eine zylindrische Verlängerung (37) aufweist, an deren Außenfläche Befestigungsmittel vorgesehen sind, die mit der Innenwand (20) des zylindrischen Verbindungsteiles (15) des Gehäuses (11) der Isolierkanne (10) zusammenwirken (Fig. 5 und 6).

6. Isolierkanne nach Anspruch 4 und 5, dadurch gekennzeichnet, daß der Einsatz (34) ein einstückiger Metallkörper ist (Fig. 5 und 6).

7. Isolierkanne nach den Ansprüchen 4 bis 6, gekennzeichnet durch die Verwendung lösbarer Verbindungsmittel zwischen dem Einsatz (34) und dem Gehäuse (11) der Isolierkanne (10).

8. Isolierkanne nach den Ansprüchen 4 bis 6, gekennzeichnet durch die Verwendung von unlösbaren Verbindungsmitteln, insbes ondere von Klebern zwischen dem Einsatz (34) und dem Gehäuse (11) der Isolierkanne (10).

9. Isolierkanne nach einem oder mehreren der Ansprüche 4 bis 8, dadurch gekennzeichnet, daß an der Innenwand der zylindrischen Verlängerung (37) des Einsatzes (34) Befestigungsvorsprünge (38) zum lösbaren Anbringen des Deckels (19) angeordnet sind (Fig. 5 und 6).

10. Isolierkanne nach Anspruch 9, dadurch gekennzeichnet, daß die Befestigungsvorsprünge (38) durch bereichsweises Herausdrücken der zylindrischen Verlängerung (31) gebildet sind (Fig. 5 und 6).

11. Isolierkanne nach Anspruch 9 und 10, gekennzeichnet durch die Anordnung von zwei diametral gegenüberliegenden Befestigungsvorsprüngen (38), die untereinander gleichgestaltet sind (Fig. 5 und 6)

12. Isolierkanne nach Anspruch 1, dadurch gekennzeichnet, daß der Handgriff (26) durch im Abstand voneinander angeordnete, quer zur Umfangsfläche des Gehäuses (11) verlaufende Schenkel (27) gebildet wird, die durch einen Steg (28) miteinander verbunden sind, der einen Freiraum (29) zur Umfangsfläche des Gehäuses (11) beläßt (Fig. 2 bis 4).

13. Isolierkanne nach Anspruch 12, dadurch gekennzeichnet, daß die Schenkel (27) den Steg (28) überragende Verlängerungen (30) aufweisen, die einen parallel zum Steg (28) verlaufenden Abschlußdeckel (33) tragen (Fig. 2 bis 4).

14. Isolierkanne nach Anspruch 12 und 13, dadurch gekennzeichnet, daß der Abschlußdeckel (33) über eine Rastverbindung mit den benachbarten Bereichen des Handgriffes (26) verbunden ist (Fig. 2 bis 4).

15. Isolierkanne nach Anspruch 14, dadurch gekennzeichnet, daß der Handgriff (26) Vorsprünge (31) und Rasten (32) aufweist, die mit den Gegenrasten des Abschlußdeckels (33) kuppelbar sind (Fig. 3).

FIG.1

FIG.2

FIG.3

FIG.4

# FIG.5

# FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | CH-A-409 288 (HELIOS KG BULLE & CO)<br>* Seite 1, Zeile 56 - Seite 2, Zeile 15 *<br>* Seite 2, Zeile 86 - Zeile 106; Abbildung 1 * | 1-3,12 | A47J41/02<br>A47G19/12 |
| A | * Seite 2, Zeile 117 - Seite 3, Zeile 2;<br>Abbildung 2 *          • | 11 | |
| | --- | | |
| A | US-A-2 807 385 (PHELPS)<br>* Spalte 1, Zeile 70 - Spalte 2, Zeile 44;<br>Abbildungen * | 4-7 | |
| | --- | | |
| A | US-A-3 015 403 (FULLER)<br><br>* Spalte 1, Zeile 49 - Spalte 3, Zeile 14;<br>Abbildungen * | 4,5,7,9,<br>10 | |
| | --- | | |
| A | DE-C-669 163 (BAYERISCHE<br>FLASCHEN-GLASHUETTENWERKE WIEGAND & SOHNE K.G.)<br>* Seite 1, Zeile 26 - Zeile 72; Abbildung * | 4,5,8 | |
| | --- | | |
| A | BE-A-343 496 (STOCK)<br>* Seite 1 - Seite 3, Zeile 16; Abbildungen 4,5 * | 4,5,7 | **RECHERCHIERTE SACHGEBIETE (Int. Cl.5 )** |
| | --- | | |
| A | US-A-2 950 032 (WILLIS ET AL)<br>* Spalte 2, Zeile 43 - Spalte 3, Zeile 24;<br>Abbildung 1 * | 13-15 | A47J<br>A47G |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 26 NOVEMBER 1991 | BODART P. |